Europäisches Patentamt

European Patent Office

Office européen des brevets

(11) Veröffentlichungsnummer: **0 142 620**
**B1**

(12) **EUROPÄISCHE PATENTSCHRIFT**

(45) Veröffentlichungstag der Patentschrift:
28.06.89

(51) Int. Cl.⁴: **G 11 B 20/10// G11B5/09**

(21) Anmeldenummer: **84109204.2**

(22) Anmeldetag: **03.08.84**

(54) **Verfahren zur Aufzeichnung eines PCM-Tonsignals mit Kompensation von Signalstörungen.**

(30) Priorität: **17.08.83 DE 3329601**

(43) Veröffentlichungstag der Anmeldung:
**29.05.85 Patentblatt 85/22**

(45) Bekanntmachung des Hinweises auf die Patenterteilung: **28.06.89 Patentblatt 89/26**

(84) Benannte Vertragsstaaten:
**AT BE CH DE FR GB IT LI LU NL SE**

(56) Entgegenhaltungen:
**DE-A- 1 908 060**
**GB-A- 2 087 627**
**US-A- 4 085 426**
**US-A- 4 202 018**
**US-A- 4 215 335**
**PATENTS ABSTRACTS OF JAPAN, Band 6, Nr. 175 (P-141)[1053], 9. September 1982; & JP-A-57 92 410 (MITSUBISHI DENKI K.K.) 09-06-1982**

(73) Patentinhaber: **TELEFUNKEN Fernseh und Rundfunk GmbH**
**Göttinger Chaussee 76**
**D-3000 Hannover 91 (DE)**

(72) Erfinder: **Platte, Hans-Joachim, Dr.**
**Königsberger Weg 22**
**D-3005 Hemmingen 4 (DE)**
Erfinder: **Oberjatzas, Günter, Dipl.-Ing.**
**Gollstrasse 64**
**D-3000 Hannover 73 (DE)**
Erfinder: **Schröder, Ernst, Dipl.-Ing.**
**Pinckenburger Strasse 25D**
**D-3000 Hannover 51 (DE)**
Erfinder: **Voessing, Walter, Dipl.-Ing.**
**Am Weingarten 14**
**D-3015 Wennigsen 1 (DE)**

(74) Vertreter: **Einsel, Robert, Dipl.-Ing.**
**TELEFUNKEN Fernseh und Rundfunk GmbH Göttinger Chaussee 76**
**D-3000 Hannover 91 (DE)**

EP 0 142 620 B1

**Beschreibung**

Die Erfindung geht aus von einem Verfahren zur Aufzeichnung eines PCM-Tonsignals mit Kompensation von Signalstörungen, bei dem außer dem PCM-Tonsignal ein davon abgeleitetes Hilfssignal mit geringerem Bedarf an Übertragungszeit, Übertragungsbandbreite oder Speicherkapazität aufgezeichnet und während einer Signalstörung als Ersatzsignal in das Tonsignal eingefügt wird. Ein derartiges Verfahren ist bekannt durch die GB-A-2 087 627.

Bei dem bekannten Verfahren wird für die Aufzeichnung des Hilfssignals eine zusätzliche Aufzeichnungsspur oder ein zusätzlicher Frequenzbereich benötigt, damit das eigentliche Tonsignal und das Hilfssignal bei der Wiedergabe getrennt ausgewertet werden können. Das bedeutet, daß ein Teil der Speicherkapazität für die Aufzeichnung des Hilfssignals reserviert werden muß.

Der Erfindung liegt die Aufgabe zugrunde, ein Verfahren der beschriebenen Art so weiterzubilden, daß für die Aufzeichnung des Hilfssignal keine zusätzliche Speicherkapazität in Form einer zusätzlichen Aufzeichnungsspur oder eines getrennten Frequenzbereiches erforderlich ist.

Diese Aufgabe wird durch die im Anspruch 1 beschriebene Erfindung gelöst. Vorteilhafte Weiterbildungen der Erfindung sind in den Unteransprüchen beschrieben.

Es ist auch bekannt (Patents Abstracts of Japan, Band 6, Nr. 175 (P-141) (1053) vom 09. September 1982), bei einem PCM-Aufzeichnungsgerät auf einer ersten Tonspur ein PCM-Tonsignal und auf einer zweiten Tonspur dasselbe Tonsignal mit Delta M-Modulation aufzuzeichnen. Dabei dient das Signal von der zweiten Tonspur als sogenannter CUE-Impuls beim Suchvorgang zu Beginn einer Wiedergabe. Die Aufgabe, Störungen in dem abgetasteten PCM-Tonsignal zu kompensieren, wird dort nicht behandelt.

Die erfindungsgemäße Lösung ermöglicht die Überbrückung auch längerer Unterbrechungen. Die Toleranzschwelle des Benutzers gegenüber Fehlern und Verschleiß von Aufzeichnungsträgern in PCM-Technik wird größer, da unkorrigierbare Fehler des PCM-Tonsignals nicht zu einer durch Austastung unmittelbar inakzeptablen Signalqualität führen. Durch eine mit steigendem Verschleiß ansteigende Häufigkeit von kurzzeitigen Überblendungen auf das Ersatzsignal wird eine allmählich stärker wahrnehmbare Degradation des PCM-Tonsignals empfunden. Bei Anwendung der Erfindung kann gegebenenfalls ein Aufzeichnungsträger noch länger ohne untragbare Störungen bei der Wiedergabe verwendet werden. Ein weiterer Vorteil besteht darin, daß gegebenenfalls das übertragene oder aufgezeichnete analoge Hilfssignal, z. B. ein NF-Tonsignal mit einer Bandbreite von einigen kHz, alleine für die Wiedergabe verwendet werden kann. Dadurch ist es möglich, den Aufzeichnungsträger auch mit einfacheren Wiedergabegeräten, z. B. mit einem tragbaren Gerät oder einem Autoradio, wiederzugeben. Bei geeigneter Aufzeichnung des Hilfssignals kann dieses stets dann auch allein zur Wiedergabe benutzt werden, wenn der Vorteil der einfacheren Wiedergabeanordnung höher bewertet wird als der Nachteil der geringeren Qualität des Hilfssignals.

Die Erfindung wird anhand der Zeichnung am Beispiel der Aufzeichnung eines PCM-Tonsignals auf einem Magnetband erläutert. Darin zeigen

Figur 1    ein Blockschaltbild für die prinzipielle Wirkungsweise,

Figur 2    Kurven zur Erläuterung der Wirkungsweise anhand des analogen Signals,

Figur 3    eine Weiterbildung des Aufnahmeteils und

Figur 4    eine Weiterbildung des Wiedergabeteils des Blockschaltbildes gemäß Figur 1.

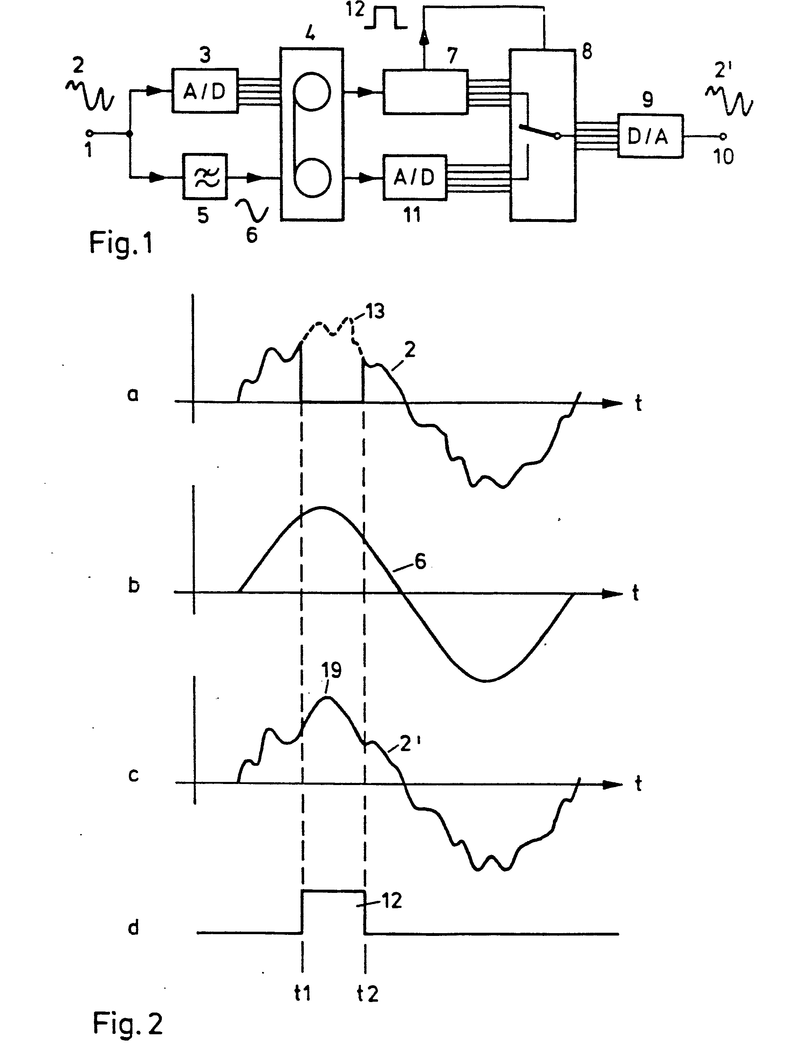

In Figur 1 steht an der Klemme 1 ein analoges NF-Tonsignal 2 mit der vollen NF-Bandbreite von 20 kHz. Dieses wird in einem A/D-Wandler 3 in ein PCM-Tonsignal umgewandelt und auf einem Magnetbandgerät 4 aufgezeichnet. Mit dem Tiefpaß 5 mit einer Grenzfrequenz in der Größenordnung von 2-6 kHz wird aus dem Tonsignal 2 ein Hilfssignal 6 geringerer Bandbreite gewonnen, das ebenfalls auf dem Magnetbandgerät 4 aufgezeichnet wird.

Bei der Wiedergabe gelangt das abgetastete PCM-Tonsignal über die Schaltung 7 und den Umschalter 8 auf den D/A-Wandler 9, der an der Klemme 10 das analoge Tonsignal 2' liefert. Das aufgezeichnete analoge Hilfssignal 6 wird über den A/D-Wandler 11 dem anderen Eingang des Umschalters 8 zugeführt.

Wenn in dem digitalen PCM-Tonsignal am Eingang der Schaltung 7 eine Störung auftritt, so wird diese in der Schaltung 7 ermittelt. Während der Störung wird der Impuls 12 erzeugt, der den Umschalter 8 betätigt und das digitale Ersatzsignal am Ausgang des A/D-Wandlers 11 in das gestörte PCM-Tonsignal einfügt.

In Figur 2 ist angenommen, daß bei der Wiedergabe in Figur 1 durch eine Störung des vom Magnetbandgerät 4 kommenden PCM-Tonsignals das Tonsignal 2 von t1-t2 gestört ist, d. h. der gestrichelt gezeichnete Signalanteil 13 fehlt. Durch eine Stummschaltung wäre das Tonsignal 2 während dieser Zeit auf 0 gesteuert, wodurch eine Störung bei der Wiedergabe entstehen kann. Figur 2b zeigt das ebenfalls vom Magnetbandgerät 4 abgetastete schmalbandige analoge Hilfssignal 6, das von t1-t2 als Ersatzsignal 19 eingefügt wird. Dadurch entsteht das korrigierte Tonsignal 2' gemäß Figur 2c, das von t1-t2 keine Unterbrechung aufweist, sondern mit ausreichender Näherung dem fehlenden Signal 13 angepaßt wird. Grundsätzlich kann die Einfügung des Ersatzsignals in das PCM-Tonsignal während einer Störung im digitalen Signalweg gemäß Figur 1 oder im analogen Signalweg erfolgen.

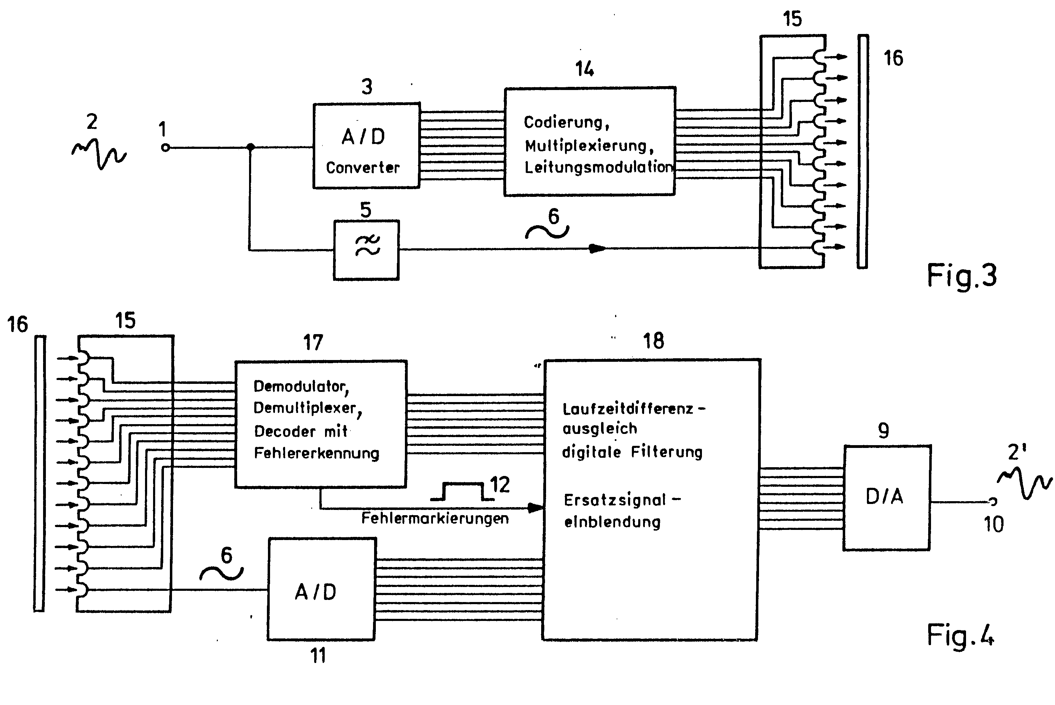

In Figur 3 wird das PCM-Tonsignal am Ausgang des A/D-Wandlers 3 in der Schaltung 14 so aufbereitet, daß es mit dem Vielspur-Magnetkopf 15 auf einer Vielzahl von parallelen Spuren des Magnetbandes 16 aufgezeichnet werden kann. Die Vielzahl von Spuren hat folgenden Zweck :

Bei einem PCM-Tonsignal mit einer Bitrate in der Größenordnung von 8-16 und einer für ausreichende Spieldauer genügend kleinen Bandgeschwindigkeit wird die aufgezeichnete Wellenlänge bei einer Spur zu klein, d. h. die Aufzeichnungsbandbreite einer Spur reicht für die Aufzeichnung eines PCM-Tonsignals hoher Bitrate nicht mehr aus. Deshalb wird die Aufzeichnung auf eine Vielzahl von Spuren, z. B. 16, verteilt. Bei einer Spurzahl von n = 16 wird die für eine Spur notwendige Bitrate ebenfalls durch n geteilt, so daß das Signal auf jeder Spur mit einer geringeren Bitrate aufgezeichnet werden kann.

Das mit dem Tiefpaß 5 gewonnene analoge Hilfssignal 6 wird mit dem Vielspurkopf 15 als analoges Signal auf einer der Spuren des Magnetbandes 16 zusätzlich aufgezeichnet. Hier erfolgt also die Aufzeichnung des Hilfssignals 6 auf dem Magnetband 16 räumlich versetzt, so daß eine gleichzeitige Störung des aufgezeichneten PCM-Tonsignals und des Hilfssignals 6 unwahrscheinlich ist. Das aufgezeichnete PCM-Tonsignal und das Hilfssignal 6 können auch zeitlich oder frequenzmäßig versetzt aufgezeichnet sein, um eine gleichzeitige Störung in beiden Signalen praktisch auszuschließen.

Figur 4 zeigt die Wiedergabeschaltung für die Aufnahmeschaltung gemäß Figur 3. Die Schaltung 17 erfüllt im wesentlichen die Funktion der Schaltung 7 gemäß Figur 1 und die Schaltung 18 die Funktion des Umschalters 8 gemäß Figur 1. Die Schaltung 18 stellt unter anderem die richtige zeitliche Lage zwischen dem PCM-Tonsignal von der Schaltung 17 und dem Ersatzsignal vom A/D-Wandler 11 her, wenn die beiden Signale zeitlich versetzt aufgezeichnet sind oder aus anderen Gründen Laufzeitunterschiede bestehen.

Die Aufzeichnung des Hilfssignals 6 auf dem Magnetband 16 kann auch mit einem zusätzlichen Kopf erfolgen, der sich über mehrere oder alle Spuren des PCM-Tonsignals erstreckt.

Gemäß der Erfindung werden das PCM-Tonsignal und das Hilfssignal 6 auf dem Magnetband auf denselben Spuren mit unterschiedlichen Eindringtiefen aufgezeichnet. Eine derartige Aufzeichnung ist möglich mit Köpfen unterschiedlicher Spaltbreite. Ein Magnetkopf kleiner Spaltbreite hat hinsichtlich der Magnetisierung der Magnetschicht eine geringere Eindringtiefe in die Magnetschicht als ein Magnetkopf mit großer Spaltbreite.

**Patentansprüche**

1. Verfahren zur Aufzeichnung eines PCM-Tonsignals mit Kompensation von Signalstörungen, bei dem außer dem PCM-Tonsignal ein davon abgeleitetes Hilfssignal (6) mit geringerem Bedarf an Übertragungszeit, Übertragungsbandbreite oder Speicherkapazität aufgezeichnet und während einer Signalstörung (t1-t2) als Ersatzsignal (19) in das Tonsignal (2) eingefügt wird, dadurch gekennzeichnet, daß das Hilfssignal (6) mit einer anderen Eindringtiefe als das Tonsignal (2) auf dem Magnetband (16) aufgezeichnet wird.

2. Verfahren nach Anspruch 1, dadurch gekennzeichnet, daß das Hilfssignal (6) zeitlich, räumlich oder frequenzmäßig versetzt gegenüber dem PCM-Signal aufgezeichnet wird.

3. Verfahren nach Anspruch 1, dadurch gekennzeichnet, daß die Einfügung des Ersatzsignals (19) mit einer die Übergangsstellen vom PCM-Tonsignal auf das Ersatzsignal und umgekehrt glättenden Überblendfunktion erfolgt.

4. Verfahren nach Anspruch 1, dadurch gekennzeichnet, daß das Hilfssignal (6) mit einem Tiefpaß (5) aus dem Tonsignal (2) abgeleitet wird.

5. Verfahren nach Anspruch 1, dadurch gekennzeichnet, daß das Hilfssignal (6) als analoges Signal aufgezeichnet wird.

6. Verfahren nach Anspruch 5, dadurch gekennzeichnet, daß das Hilfssignal (6) bei der Wiedergabe in ein digitales Ersatzsignal umgewandelt und in das PCM-Tonsignal eingefügt wird.

7. Verfahren nach Anspruch 5, dadurch gekennzeichnet, daß bei der Aufzeichnung des PCM-Tonsignals auf mehreren parallelen Spuren des Magnetbandes (16) mit einem feststehenden Vielspurkopf (15) das analoge Hilfssignal (6) dem PCM-Tonsignal über die Breite mehrerer Spuren überlagert aufgezeichnet wird.

8. Verfahren nach Anspruch 7, dadurch gekennzeichnet, daß die Aufzeichnung und Abtastung des Hilfssignals (6) mit einem Magnetkopf erfolgt, dessen Spurbreite größer als die Spurbreite der Magnetköpfe für das PCM-Tonsignal ist.

9. Verfahren nach Anspruch 1, dadurch gekennzeichnet, daß das Hilfssignal als DPCM-Signal aufgezeichnet wird.

10. Verfahren nach Anspruch 1, dadurch gekennzeichnet, daß für die Tonwiedergabe nur das Hilfssignal (6) ausgenutzt wird.

**Claims**

1. A method of recording a PCM sound signal with compensation for signal disturbances, wherein, apart from the PCM sound signal, an auxiliary signal (6) derived therefrom and needing less transmission time, transmission bandwidth or storage capacity is recorded and, during a signal disturbance (t1-t2) is introduced into the sound signal (2) as a replacement signal (19), characterised in that the auxiliary signal (6) is recorded on the magnetic tape (16) with a different depth of penetration from the sound signal (2).

2. A method according to Claim 1, characterised in that the auxiliary signal (6) is recorded offset in time, in space or with regard to frequency in relation to the PCM signal.

3. A method according to Claim 1, characterised in that the introduction of the replacement signal (19) is effected with a cross-fading function smoothing the transitions from the PCM sound signal to the replacement signal and vice versa.

4. A method according to Claim 1, characterised in that the auxiliary signal (6) is derived from the sound signal (2) by a low-pass filter (5).

5. A method according to Claim 1, characterised in that the auxiliary signal (6) is recorded as an analogue signal.

6. A method according to Claim 5, characterised in that, during the reproduction, the auxiliary signal (6) is converted into a digital replacement signal and introduced into the PCM sound signal.

7. A method according to Claim 5, characterised in that during the recording of the PCM signal on a plurality of parallel tracks of the magnetic tape (16) with a stationary multi-track head (15), the analogue auxiliary signal (6) is recorded superimposed on the PCM sound signal over the width of a plurality of tracks.

8. A method according to Claim 7, characterised in that the recording and playing back of the auxiliary signal (6) is effected with a magnetic head, the track width of which is greater than the track width of the magnetic heads for the PCM sound signal.

9. A method according to Claim 1, characterised in that the auxiliary signal is recorded in the form of a DPCM.

10. A method according to Claim 1, characterised in that only the auxiliary signal (6) is utilized for the sound reproduction.

**Revendications**

1. Procédé pour enregistrer un signal acoustique MIC avec compensation de perturbations du signal, selon lequel, en dehors du signal acoustique MIC, un signal auxiliaire (6) dérivé de ce dernier et présentant un besoin plus faible du point de vue temps de transmission, largeur de bande de transmission ou capacité de mémoire, est enregistré et inséré, pendant une perturbation (t1-t2) du signal, en tant que signal de remplacement (19) dans le signal acoustique (2), caractérisé en ce que le signal auxiliaire (6) est enregistré avec une profondeur de pénétration différente de celle du signal acoustique (2) dans la bande magnétique (16).

2. Procédé selon la revendication 1, caractérisé en ce que le signal auxiliaire (6) est enregistré en étant décalé, dans le temps, dans l'espace ou du point de vue des fréquences, par raport au signal MIC.

3. Procédé selon la revendication 1, caractérisé en ce que l'insertion du signal de remplacement (19) s'effectue avec une fonction de fondu enchaîné, qui lisse les zones de transition du signal acoustique MIC au signal de remplacement et inversement.

4. Procédé selon la revendication 1, caractérisé en ce que le signal auxiliaire (6) est dérivé du signal acoustique (2) au moyen d'un filtre passe-bas (5).

5. Procédé selon la revendication 1, caractérisé en ce que le signal auxiliaire (6) est enregistré sous la forme d'un signal analogique.

6. Procédé selon la revendication 5, caractérisé en ce que le signal auxiliaire (6) est converti, lors de la lecture, en un signal de remplacement numérique et est inséré dans le signal acoustique MIC.

7. Procédé selon la revendication 5, caractérisé en ce que, lors de l'enregistrement du signal acoustique MIC sur plusieurs pistes parallèles de la bande magnétique (16) au moyen d'une tête fixe à quatre pistes (15), le signal auxiliaire analogique (6) est enregistré en superposition sur le signal acoustique MIC, sur la largeur de plusieurs pistes.

8. Procédé selon la revendication 7, caractérisé en ce que l'enregistrement et l'exploration du signal auxiliaire (6) s'effectuent à l'aide d'une tête magnétique, dont la largeur de la piste est supérieure à la largeur de la piste des têtes magnétiques pour le signal acoustique MIC.

9. Procédé selon la revendication 1, caractérisé en ce que le signal auxiliaire est enregistré sous la forme d'un signal DMIC.

10. Procédé selon la revendication 1, caractérisé en ce que seul le signal auxiliaire (6) est utilisé pour la lecture du son.

Fig. 1

Fig. 2

Fig.3

Fig.4

EP 0 142 620 B1

**Fig.3**

3 A / D Converter

14 Codierung, Multiplexierung, Leitungsmodulation

5 ≈

~6

2

1

15

16

**Fig.4**

16

15

17 Demodulator, Demultiplexer, Decoder mit Fehlererkennung

18 Laufzeitdifferenz- ausgleich digitale Filterung Ersatzsignal- einblendung

9 D/A

~6

11 A / D

12 Fehlermarkierungen

2'

10